(19) **Europäisches Patentamt / European Patent Office / Office européen des brevets**

(11) **EP 1 978 496 A1**

(12) **EUROPEAN PATENT APPLICATION**
published in accordance with Art. 158(3) EPC

(43) Date of publication:
**08.10.2008 Bulletin 2008/41**

(51) Int Cl.:
**G09C 1/00** *(2006.01)*   **H04L 9/06** *(2006.01)*

(21) Application number: **07706357.6**

(22) Date of filing: **04.01.2007**

(86) International application number:
**PCT/JP2007/050010**

(87) International publication number:
**WO 2007/086243 (02.08.2007 Gazette 2007/31)**

(84) Designated Contracting States:
**DE FR GB**

(30) Priority: **24.01.2006 JP 2006014910**

(71) Applicant: **Sony Corporation**
**Minato-ku**
**Tokyo (JP)**

(72) Inventors:
 • **SHIBUTANI, Kyoji**
   **SHINAGAWA-KU, Tokyo 141-0001 (JP)**
 • **SHIRAI, Taizo**
   **SHINAGAWA-KU Tokyo 141-0001 (JP)**

(74) Representative: **Körber, Martin Hans**
   **Mitscherlich & Partner**
   **Sonnenstrasse 33**
   **80331 München (DE)**

(54) **ENCRYPTION/DECRYPTION DEVICE, ENCRYPTION/DECRYPTION DEVICE MANUFACTURING DEVICE, AND METHOD, AND COMPUTER PROGRAM**

(57)   A Feistel type common key block cipher process configuration capable of maintaining the involution property and safety and easily changing the number of rounds is realized. The Feistel type cipher process configuration having an SP type F function which includes a nonlinear conversion section and a linear conversion section configures an n-round basic unit which has a matrix arrangement satisfying involution property and ODM-MR or SDM-MR which is a preset F function arrangement condition. For this unit, an F function satisfying the arrangement condition of the F function is selected and added or a plurality of basic units are connected so as to constitute the Feistel cipher configuration having an increased number of rounds having the arrangement satisfying the involution property and the ODM-MR or the SDM-MR.

FIG.12

**Description**

Technical Field

This invention relates to a cipher process apparatus, a cipher process apparatus manufacturing apparatus, and methods, as well as a computer program. More particularly, it relates to a cipher process apparatus, a cipher process apparatus manufacturing apparatus, and methods, as well as a computer program wherein a Feistel type common key block cipher process is executed.

Background Art

Recently, together with development of network communication and electronic commercial transactions, assurance of the security in communication has become a significant subject. One of methods of assuring the security is a cryptographic technique, and communication which uses various encryption techniques is carried out actually.

For example, a system has been placed into practical use wherein a cipher process module is incorporated in a small-sized device such as an IC card and data transceiving is carried out between the IC card and a reader/writer as a data reading/writing apparatus to carry out an authentication process or encryption and decryption of transceiving data.

Although various cipher process algorithms are available, where they are classified roughly, they are classified into a public key cryptosystem wherein an encryption key and a decryption key are set as different keys, for example, as a public key and a secret key and a common key cryptosystem wherein an encryption key and a decryption key are set as a common key.

Although various algorithms are available for the common key cryptosystem, one of the algorithms uses a system wherein a plurality of keys are generated based on a common key and a data conversion process in a unit of a block (64 bits, 128 bits or the like) is repetitively executed using the generated plural keys. A representative one of algorithms wherein such a key generation system and a data conversion process as described above are applied is a common key block cryptosystem.

As one of designs of the common key block cryptosystem, a structure called Feistel structure wherein a basic conversion function is executed repetitively for plaintext data inputted as an object of encryption processing is used frequently. The Feistel structure is composed of repetitions of a basic processing unit called round function. To what number the number of repetitions of a round function, that is, the round number (or stage number), should be set is not particularly fixed but is determined upon design.

If the round number is set high, then although the processing time becomes long, it is possible to raise the strength against various attacks, that is, against cryptanalysis such as a difference analysis to raise the safety. Accordingly, it is preferable to set the round number in accordance with a utilization object such as a case wherein priority is placed on the processing time or another case wherein priority is placed on the safety.

Disclosure of Invention

Technical Problem

It is an object of the present invention to provide a cipher process apparatus, a cipher process apparatus manufacturing apparatus, and methods, as well as a computer program which make it possible, in a configuration wherein a Feistel type common key block cipher process having a Feistel structure which is one of common key block cryptosystems is executed, to carry out change of the round number readily and make it possible to carry out a cipher process in various settings of the round number while a configuration having a high resisting property against attacks such as a difference attack is maintained.

Technical Solution

The first aspect of the present invention resides in a cipher process apparatus having a characteristic that includes:

a cipher process section for executing a Feistel type common key block cipher process which repeats an SP type F function of executing a data conversion process including a nonlinear conversion process and a linear conversion process by a plurality of rounds, the cipher process section having a cipher process basic unit having an involution property which allows an encryption function and a decryption function to be carried out by the same circuit only by reversing the order of use of round keys to be used and having an array of a plurality of different F functions which satisfies an F function array condition set in advance; and

a control section for carrying out execution control of cipher process operation wherein the cipher process basic unit is utilized once or repetitively by a plural number of times based on utilization time number setting information of the cipher process basic unit configured in the cipher process section.

Further, in an embodiment of the cipher process apparatus of the present invention, the F function array condition has a characteristic that, in a case wherein the F function of each round included in the cipher process section which executes the Feistel type common key block cipher process has a configuration which includes three different kinds of F functions $F_0$, $F_1$ and $F_2$ which apply three different linear conversion matrices $M_0$, $M_1$ and $M_2$, where the odd-numbered rounds are successively selected from the top thereof, includes the three kinds of F functions $F_0$, $F_1$ and $F_2$ in three successive ones, but where the even-numbered rounds are selected from the last round thereof, includes the three kinds of F functions $F_0$, $F_1$ and $F_2$ in three successive ones.

Further, in an embodiment of the cipher process apparatus of the present invention, the F function array condition has a characteristic that, in a case wherein the F function of each round included in the cipher process section which executes the Feistel type common key block cipher process has a configuration which includes two different kinds of F functions $F_0$ and $F_1$ which apply two different linear conversion matrices $M_0$ and $M_1$, where the odd-numbered rounds are successively selected from the top thereof, includes the two kinds of F functions $F_0$ and $F_1$ in two successive ones, but where the even-numbered rounds are selected from the last round thereof, includes the two kinds of F functions $F_0$ and $F_1$ in two successive ones.

Further, the second aspect of the present invention resides in a cipher process apparatus manufacturing apparatus having a characteristic that includes:

a cipher process basic unit production section which is a cipher process section for executing a Feistel type common key block cipher process which repeats an SP type F function of executing a data conversion process including a nonlinear conversion process and a linear conversion process by a plurality of rounds, the cipher process basic unit production section producing a cipher process basic unit having an involution property which allows an encryption function and a decryption function to be carried out by the same circuit only by reversing the order of use of round keys to be used and having an array of a plurality of different F functions which satisfies an F function array condition set in advance; and

a round number changing section for executing a process of applying the cipher process basic unit and selecting and adding an F function which satisfies the F function array condition based on the round number of the cipher process section set in the cipher process apparatus.

Further, in an embodiment of the cipher process apparatus manufacturing apparatus of the present invention, the F function array condition has a characteristic that, in a case wherein the F function of each round included in the cipher process section which executes the Feistel type common key block cipher process has a configuration which includes three different kinds of F functions $F_0$, And which apply three different linear conversion matrices $M_0$, $M_1$ and $M_2$, where the odd-numbered rounds are successively selected from the top thereof, includes the three kinds of F functions $F_0$, $F_1$ and $F_2$ in three successive ones, but where the even-numbered rounds are selected from the last round thereof, includes the three kinds of F functions $F_0$, $F_1$ and $F_2$ in three successive ones.

Further, in an embodiment of the cipher process apparatus manufacturing apparatus of the present invention, the F function array condition has a characteristic that, in a case wherein the F function of each round included in the cipher process section which executes the Feistel type common key block cipher process has a configuration which includes two different kinds of F functions And $F_1$ which apply two different linear conversion matrices $M_0$ and $M_1$, where the odd-numbered rounds are successively selected from the top thereof, includes the two kinds of F functions $F_0$ and $F_1$ in two successive ones, but where the even-numbered rounds are selected from the last round thereof, includes the two kinds of F functions $F_0$ and $F_1$ in two successive ones.

Further, in an embodiment of the cipher process apparatus manufacturing apparatus of the present invention, the round number changing section has a characteristic that is configured so as to execute a process of selecting and adding an F function, which satisfies the F function array condition, successively one by one prior to the top round and next to the last round which compose the cipher process basic unit.

Further, in an embodiment of the cipher process apparatus manufacturing apparatus of the present invention, the round number changing section has a characteristic that is configured such that a plurality of such cipher process basic units are connected to execute the F function addition process.

Further, the third aspect of the present invention resides in a cipher process method having a characteristic that includes:

a cipher process step of executing a Feistel type common key block cipher process which repeats an SP type F function of executing a data conversion process including a nonlinear conversion process and a linear conversion process by a plurality of rounds, the cipher process step including execution of a cipher process which utilizes a cipher process basic unit having an involution property which allows an encryption function and a decryption function to be carried out by the same circuit only by reversing the order of use of round keys to be used and having an array of a plurality of different F functions which satisfies an F function array condition set in advance; and
a control step of carrying out execution control of cipher process operation wherein the cipher process basic unit is utilized once or repetitively by a plural number of times based on utilization time number setting information of the cipher process basic unit configured in the cipher process section.

Further, in an embodiment of the cipher process method of the present invention, the F function array condition has a characteristic that, in a case wherein the F function of each round included in the cipher process section which executes the Feistel type common key block cipher process has a configurations which includes three different kinds of F functions $F_0$, And Which apply three different linear conversion matrices $M_0$, $M_1$ and $M_2$, where the odd-numbered rounds are successively selected from the top thereof, includes the three kinds of F functions $F_0$, $F_1$ and $F_2$ in three successive ones, but where the even-numbered rounds are selected from the last round thereof, includes the three kinds of F functions $F_0$, And $F_2$ in three successive ones.

Further, in an embodiment of the cipher process method of the present invention, the F function array condition has a characteristic that, in a case wherein the F function of each round included in the cipher process section which executes the Feistel type common key block cipher process has a configuration which includes two different kinds of F functions $F_0$ and $F_1$ which apply two different linear conversion matrices $M_0$ and $M_1$, where the odd-numbered rounds are successively selected from the top thereof, includes the two kinds of F functions $F_0$ and $F_1$ in two successive ones, but where the even-numbered rounds are selected from the last round thereof, includes the two kinds of F functions $F_0$ and $F_1$ in two successive ones.

Further, the fourth aspect of the present invention resides in a cipher process apparatus manufacturing method having a characteristic that includes:

a cipher process basic unit production step which is a cipher process section for executing a Feistel type common key block cipher process which repeats an SP type F function of executing a data conversion process including a nonlinear conversion process and a linear conversion process by a plurality of rounds, the cipher process basic unit production step producing a cipher process basic unit having an involution property which allows an encryption function and a decryption function to be carried out by the same circuit only by reversing the order of use of round keys to be used and having an array of a plurality of different F functions which satisfies an F function array condition set in advance; and

a round number changing step of executing a process of applying the cipher process basic unit and selecting and adding an F function which satisfies the F function array condition based on the round number of the cipher process section set in a cipher process apparatus.

Further, in an embodiment of the cipher process apparatus manufacturing method of the present invention, the F function array condition has a characteristic that, in a case wherein the F function of each round included in the cipher process section which executes the Feistel type common key block cipher process has a configuration which includes three different kinds of F functions $F_0$, $F_1$ and Which apply three different linear conversion matrices $M_0$, $M_1$ and $M_2$, where the odd-numbered rounds are successively selected from the top thereof, includes the three kinds of F functions $F_0$, $F_1$ and $F_2$ in three successive ones, but where the even-numbered rounds are selected from the last round thereof, includes the three kinds of F functions $F_0$, $F_1$ and $F_2$ in three successive ones.

Further, in an embodiment of the cipher process apparatus manufacturing method of the present invention, the F function array condition has a characteristic that, in a case wherein the F function of each round included in the cipher process section which executes the Feistel type common key block cipher process has a configuration which includes two different kinds of F functions $F_0$ and $F_1$ which apply two different linear conversion matrices $M_0$ and $M_1$, where the odd-numbered rounds are successively selected from the top thereof, includes the two kinds of F functions $F_0$ and $F_1$ in two successive ones, but where the even-numbered rounds are selected from the last round thereof, includes the two kinds of F functions $F_0$ and $F_1$ in two successive ones.

Further, in an embodiment of the cipher process apparatus manufacturing method of the present invention, the round number changing step has a characteristic that is a step at which a process of selecting and adding an F function, which satisfies the F function array condition, successively one by one prior to the top round and next to the last round which compose the cipher process basic unit is executed.

Further, in an embodiment of the cipher process apparatus manufacturing method of the present invention, the round number changing step has a characteristic that is a step at which a plurality of such cipher process basic units are connected to execute the F function addition process.

Further, the fifth embodiment of the present invention resides in a computer program for causing a cipher process apparatus to execute a cipher process, the computer program has a characteristic that causes:

a cipher process section to carry out a cipher process step of executing a Feistel type common key block cipher process which repeats an SP type F function of executing a data conversion process including a nonlinear conversion process and a linear conversion process by a plurality of rounds, the cipher process step including execution of a cipher process which utilizes a cipher process basic unit having an involution property which allows an encryption function and a decryption function to be carried out by the same circuit only by reversing the order of use of round keys to be used and having an array of a plurality of different F functions which satisfies an F function array condition set in advance; and

a control section to carry out a control step of carrying out execution control of cipher process operation wherein the cipher process basic unit is utilized once or repetitively by a plural number of times based on utilization time number setting information of the cipher process basic unit configured in the cipher process section.

It is to be noted that the computer program of the present invention is a computer program which can be provided by a storage medium or a communication medium which provides the computer program in a computer-readable form, for example, a recording medium such as a CD, an FD or an MO or a communication medium such as a network, for example, to a computer system which can execute various program codes. By providing such a program as described above in a computer-readable form, a process according to the program is implemented on the computer system.

The other objects, features and advantages of the present invention will become apparent from the more detailed description taken in conjunction with the embodiment of the present invention hereinafter described and the accompanying drawings. It is to be noted that, in the present specification, the term system is used to represent a logical set configuration of a plurality of apparatus and is not limited to a system whose component apparatus are included in the same housing.

Advantageous Effects

With the configuration of the present invention, in the Feistel type common key block cipher process configuration which executes an SP type F function having a nonlinear conversion section and a linear conversion section repetitively by a plurality of rounds, a Feistel cipher configuration of an n-round configuration having an involution property set in advance and having a matrix array which satisfies an ODM-MR or an SDM-MR as an array condition of an F function set in advance is formed as a cipher process basic unit. Then, by a process of adding an F function selected under a condition setting that the array condition of the F function is satisfied to the cipher process basic unit or by a process of connecting a plurality of such cipher process basic units, a Feistel cipher configuration which has an involution property and an array which satisfies the ODM-MR or the SDM-MR and has an increased number of rounds can be constructed.

Brief Description of the Drawings

[FIG. 1] is a view illustrating a configuration of a representative common key block cipher having a Feistel structure.
[FIG. 2] is a view illustrating a configuration of an F function set as a round function section.
[FIG. 3] is a view illustrating an involution property of a Feistel type cipher process.
[FIG. 4] is a view illustrating a Feistel type cipher algorithm which utilizes two different linear conversion matrices.
[FIG. 5] is a view illustrating a Feistel type cipher algorithm which utilizes three different linear conversion matrices.
[FIG. 6] is a view illustrating a Feistel type cipher algorithm of a six-round configuration having three different F function parts.
[FIG. 7] is a view illustrating a Feistel type cipher algorithm of an eight-round configuration having three different F function parts.
[FIG. 8] is a view illustrating a round number addition process to a Feistel type cipher process basic unit having three different F function parts.
[FIG. 9] is a view illustrating another round number addition process to a Feistel type cipher process basic unit having three different F function parts.
[FIG. 10] is a view illustrating a round number addition process which utilizes a plurality of Feistel type cipher process basic units having three different F function parts.
[FIG. 11] is a view illustrating a round number addition process which utilizes a plurality of Feistel type cipher process basic units having two different F function parts.

[FIG. 12] is a view illustrating a control process of a cipher process apparatus which utilizes a Feistel type cipher process basic unit having three different F function parts.

[FIG. 13] is a view illustrating a control process of a cipher process apparatus which utilizes a Feistel type cipher process basic unit having two different F function parts.

[FIG. 14] is a view showing an example of a configuration of an IC module as a cipher process apparatus which executes a cipher process according to the present invention.

[FIG. 15] is a view showing an example of a configuration of a cipher process apparatus manufacturing apparatus according to the present invention.

Best Mode for Carrying Out the Invention

In the following, details of a cipher process apparatus, a cipher process apparatus manufacturing apparatus, and methods, as well as a computer program of the present invention are described. The description is given in accordance with the following items.

1. Feistel Structure having an SP type F function
2. Optimum Diffusion Conversion and Sub Optimum Diffusion Conversion
3. Involution Property
4. Feistel Type Cipher Configuration having an SP type F function Which Utilizes a Plurality of Different Conversion Matrices
5. Configuration Which Facilitates Change of the Round Number in a Feistel Type Cipher Having an SP Type F function Which Utilizes a Plurality of Different Conversion Matrices
6. Example of a Configuration of a Cipher process Apparatus
7. Example of a Configuration of a Cipher process Apparatus Manufacturing Apparatus

[1. Feistel Structure having an SP type F function]

First, a Feistel structure which has an SP type F function is described. As a design of a common key block cipher, a structure called Feistel structure wherein basic conversion functions are disposed in a certain special order is frequently used for a conversion method of plaintext data. The Feistel structure has a structure of converting plaintext into a cipher by simple repetitions of a conversion function called round function.

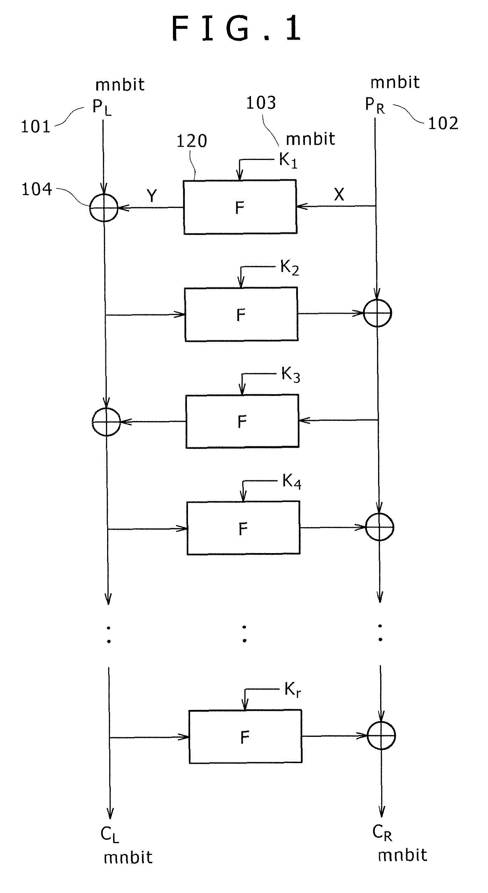

The Feistel structure is described with reference to FIG. 1. It is assumed that the length of plaintext inputted as an object of encryption is 2 mn bits. It is to be noted that both of m and n are integers. First, the plaintext of 2mn bits is divided into two input data $P_L$ (Plain-Left) 101 and $P_R$ (Plain-Right) 102 of mn bits, and they are used as input values.

The Feistel structure is represented by repetitions of a basic structure called round function, and a data conversion function included in each round is called F function 120. In the configuration of FIG. 1, an example of a configuration wherein the F function (round function) 120 is repeated by r stages.

For example, in the first round, input data X of mn bits and a round key $K_1$ 103 of mn bits which is inputted from a keys generation section (not shown) are inputted to an F function 120, and data Y of mn bits is outputted after the data conversion process in the F function 120. The output and the input data from the other preceding stage (in the case of the first stage, the input data $P_L$) are subjected to exclusive ORing operation by an exclusive ORing section 104, and an operation result of mn bits is outputted to a next round function. This process, that is, the F function, is applied repetitively by the determined round number (r) to complete the encryption process, and divisional data $C_L$ (Cipher-Left) and $C_R$ (Cipher-Right) of a cipher are outputted. From the configuration described above, it is derived that the decryption process of the Feistel structure only requires reversal of the order of insertion of round keys but does not require configuration of an inverse function.

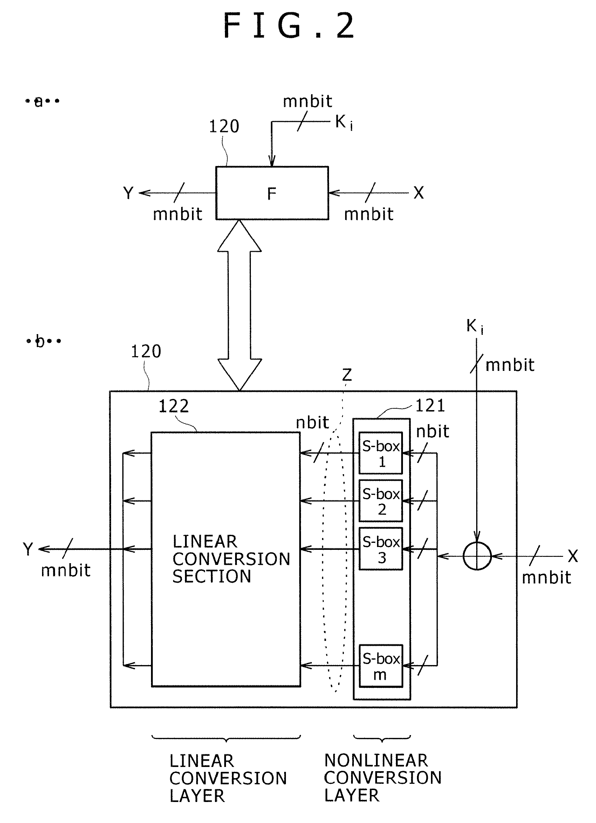

The configuration of the F function 120 set as a function for each round is described with reference to FIG. 2. FIG. 2(a) is a view illustrating an input to and an output from an F function 120 for one round, and FIG. 2(b) is a view illustrating details of the configuration of the F function 120. The F function 120 has a so-called SP type configuration wherein a nonlinear conversion layer (S layer) and a liner conversion layer (P layer) are connected to each other as seen in FIG. 2(b).

The F function 120 illustrated in FIG. 2 is a function having a setting that the input/output bit length is $m \times n$ (m, n: integer) bits. In the inside of the SP type F function, exclusive ORing of key data $K_i$ and data $X_i$ is executed first, and then the nonlinear conversion layer (S layer) is applied, whereafter the linear conversion layer (P layer) is applied.

More particularly, the nonlinear conversion layer (S layer) includes a juxtaposition of m nonlinear conversion tables of an n-bit input and an n-bit output called S-box 121. Data of mn bits is divided for each n bits and inputted to corresponding S-boxes 121, by which the data is converted. In each S-box, a nonlinear conversion process which applies, for example, a conversion table is executed.

The linear conversion layer (P layer) is formed from a linear conversion section 122, which inputs an output value Z of mn bits which is output data from the S boxes 121, carries out linear conversion for the input and outputs a result of mn bits. The linear conversion section 122 executes a linear conversion process such as an exchanging process of an input bit position and outputs an output value Y of mn bits. This output value Y is exclusively ORed with input data from the preceding stage, and a result of the exclusive ORing is used as an input value of the F function for a next round.

It is to be noted that, in the configuration of the present embodiment described below, the linear conversion executed by the linear conversion section 122 as the linear conversion layer (P layer) is defined as linear conversion which is carried out by applying a matrix of man × mn defined on the GF(2), and a matrix included in the ith round is referred to as $M_i$.

[2. Optimum Diffusion Conversion and Sub Optimum Diffusion Conversion]

Preferably, in a Feistel type cipher having an SP type F function described above, a matrix which satisfies a certain condition is applied to the linear conversion matrix to be applied to the linear conversion executed by the linear conversion layer of the F function so that the cipher strength may not be deteriorated. This condition will be described in detail.

As a special example of the linear conversion, optimal diffusion mappings (ODM) is defined in the following manner.

For mapping for carrying out linear conversion from n × a-bit data into n × b-bit data,

$\theta: \{0, 1\}^{na} \rightarrow \{0, 1\}^{nb}$

the branch number $B(\theta)$ is defined as given below:

$$B(\theta) = \min_{\alpha \neq 0}\{hw_n(\alpha) + hw_n(\theta(\alpha))\}$$

where $\min_{\alpha \neq 0}\{X_\alpha\}$ represents a minimum value from among all $X_\alpha$ which satisfy $\alpha \neq 0$, and $hw_n(Y)$ represents a function which returns, when a bit string Y is represented by being punctuated for each n bits, the number of (non-zero) elements wherein all n-bit data are not zero.

At this time, a map $\theta$ whose branch number $B(\theta)$ is b+1 is defined as optimal diffusion mappings (ODM). Further, the number of branches of a matrix M is represented as B(M) for the convenience of description.

Further, a map $\theta$ whose branch number $B(\theta)$ is smaller than b + 1 is defined as sub optimal diffusion mappings (SDM).

Where, in a Feistel type cipher having an SP type F function described above, a linear conversion matrix to be applied to linear conversion to be executed by the linear conversion layer of the F function is to be determined, it is studied whether or not such setting that the optimum conversion mapping (SDM) described above, that is, the mapping $\theta$ whose branch number $B(\theta)$ is b + 1, and the sub optimal diffusion mapping (SDM), that is, the mapping $\theta$ whose branch number $B(\theta)$ is smaller than b + 1, are to be executed to determine a matrix. A particular matrix determination process is hereinafter described.

[3. Involution Property]

An encryption function E which executes a Feistel type cipher having such an SP type F function is defined as given below.

$$E(P_L || P_R, K_1, K_2, ..., K_r)$$

$P_L$ and $P_R$ appearing in the encryption function E represent plaintext inputted as an object of a cipher process, || represents connection, and $K_1$, $K_2$, ..., $K_r$ represent round keys to be used in the individual rounds.

In the cipher process represented by such an encryption function E as given above, the decryption function D can be represented in the following manner.

$$D(C_L||C_R, K_1, K_2, ..., K_r)$$

$$= E(C_L||C_R, K_r, ..., K_2, K_1)$$

$C_L$ and $C_R$ appearing in the decryption function D represent a cipher to be inputted as a decoding process object, || represents connection, and $K_r$, ..., $K_2$, $K_1$ represent round keys to be used in the individual rounds.

In this manner, the Feistel structure common key block cipher has a characteristic that usually an encryption function and a decryption function can be carried out by the same circuit only by reversing the order of use of the round keys to be used. In particular, by applying the same circuit without setting individual circuits for the encryption process and the decryption process, both of the encryption process and the decryption process can be executed by only setting the processing order reversely. The property which the Feistel structure common key block cider has is defined as involution property.

The involution property which the Feistel structure common key block cipher has is described with reference to the figures. The Feistel structure illustrated in FIG. 1 is determined as a Feistel structure to be applied to the encryption process. In this instance, the encryption function E is executed. In particular,

$$E(P_L||P_R, K_1, K_2, ..., K_r)$$

is executed. $P_L$ and $P_R$ represent plaintext inputted as an object of a cipher process as seen in FIG. 1, and $K_1$, $K_2$, ..., $K_r$ represent round keys to be used in the individual rounds as seen in FIG. 1.

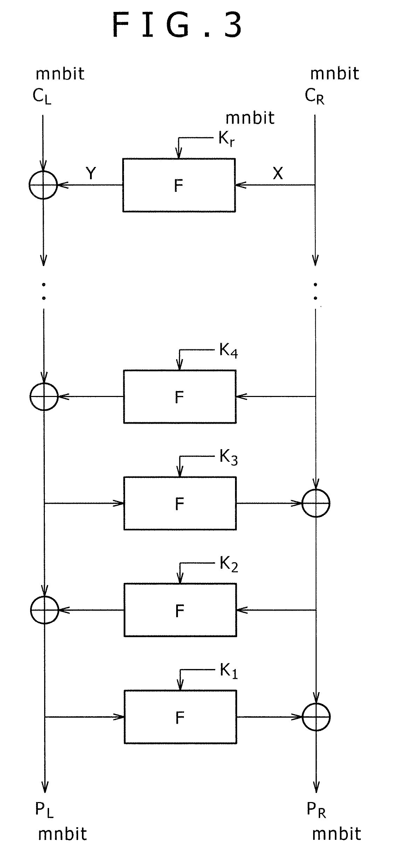

On the other hand, the Feistel structure for decrypting the cipher $C_L$ and $C_R$ as a result of the encryption process according to the Feistel structure illustrated in FIG. 1 has a configuration illustrated in FIG, 3. The Feistel structure illustrated in FIG. 3 executes the decryption function D, that is,

$$D(C_L||C_R, K_1, K_2, ..., K_r)$$

$$= E(C_L||C_R, K_r, ..., K_2, K_1)$$

$C_L$ and $C_R$ represent a cipher to be inputted as a decrypting process object as seen in FIG. 3, and $K_r$, ..., $K_2$), $K_1$ represent round keys to be used in the individual rounds as seen in FIG. 3.

In this manner, in the Feistel structure common key block cipher, both of the encryption process and the decryption process can be executed only by applying the same circuit to set the process order reversely without setting different circuits to the encryption process and the decryption process. This is defined as involution property.

[4. Feistel Type Cipher Configuration having an SP type F function Which Utilizes a Plurality of Different Conversion Matrices]

If a linear conversion matrix to be applied to each round in a Feistel type cipher having an SP type F function is set as a different matrix, then the withstanding property against attacks such as, for example, a difference analysis can be raised. In other words, it is possible to raise the cipher strength. It is to be noted that details of a configuration which raises the cipher strength of a Feistel type cipher having an SP type F function by setting linear conversion matrices applied in each round as to different matrices are described in a preceding Japanese patent application: Japanese Patent Application No. 2005-313842 by the same applicant as that of the present invention.

In a Feistel type cipher of the conventional type, there exists a characteristic that a plurality of differences are canceled simultaneously upon propagation of a difference because the same linear conversion layer is used for the F function of all rounds (stages). As a representative one of cryptanalysis techniques, a differential analysis (or a differential decryption method) of analyzing an application key of each round function by analyzing a large number of input data (plaintext) having some differences and a large number of output data (ciphers) is known, and in a common key block cipher of a conventional DES cipher algorithm or the like, since an equal process (conversion matrix) to be applied in a linear conversion section of an F function is applied to rounds of different stages, it is easy to carry out difference analysis, and as a result, facility in analysis of a key is invited.

By using different matrices according to a particular sequence as linear conversion matrices to be applied as the F functions of individual rounds, the characteristic that a plurality of differences are canceled at the same time upon propagation of a difference can be eliminated, and the withstanding property against attacks such as a difference analysis can be raised.

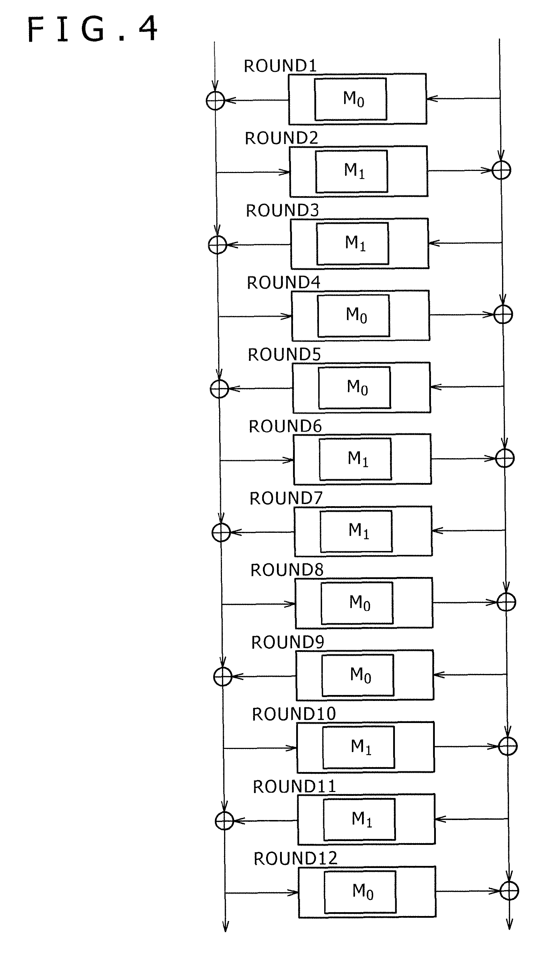

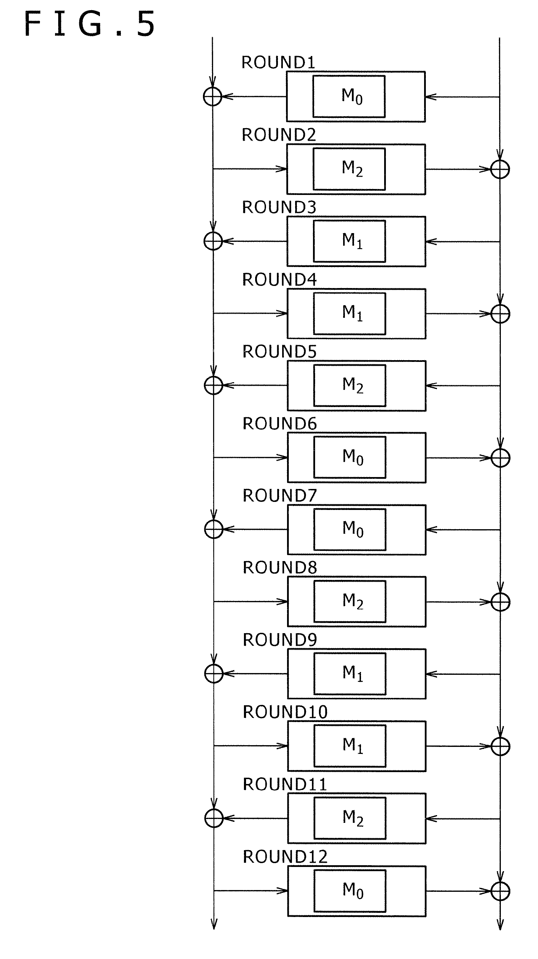

Particular examples are described with reference to FIGS. 4 and 5. The example of FIG. 4 is an example wherein two different matrices $M_0$ and $M_1$ are utilized as a matrix for a linear conversion process to be applied by the linear conversion section in the F function of each stage in a Feistel type common key block cipher process configuration having a plurality of stages (rounds).

In particular, a configuration which applies two different matrices $M_0$ and $M_1$ so that the following two conditions (a) and (b):

(a) $M_0$ and $M_1$ are arranged in the order of $M_0$ and $M_1$ at odd-numbered stages, and
(b) $M_0$ and $M_1$ are arranged in the order of $M_0$ and $M_1$ at even-numbered stages from the last stage

as particularly illustrated in FIG. 4 are satisfied is used. It is to be noted that the order of $M_0$ and $M_1$ may be reversed. In particular, that the same matrix does not appear successively at odd-numbered stages and the same matrix does not appear successively also when even-numbered stages are viewed from the last stage makes a condition that the withstanding property against attacks such as a difference analysis can be raised.

The condition (a) is (a) a condition for arranging $M_0$ and $M_1$ in the order of $M_0$ and $M_1$ at the odd-numbered stages, and the matrices $M_0$ and $M_1$ are arranged in the order of the rounds 1, 3, 5, ... as seen in FIG. 4. The condition (b) is (a) a condition for arranging $M_0$ and $M_1$ in the order of $M_0$ and $M_1$ at the even-numbered stages from the last stage, and the matrices $M_0$ and $M_1$ are arranged in the order of the rounds 12, 10, 8, ... as seen in FIG. 4. Here, the matrices $M_0$ and $M_1$ are two different linear conversion matrices executed in the F function in the rounds.

The example illustrated in FIG. 4 is an example which utilizes two different linear conversion matrices, and also with this configuration, it is possible to raise the withstanding property against a difference attack. However, also another configuration which utilizes three different matrices $M_0$, $M_1$ and $M_2$ can be used. FIG. 5 shows an example which utilizes the three different matrices $M_0$, $M_1$ And $M_2$ as a matrix for a linear conversion process to be applied in the linear conversion section in the F function at the stages in the Feistel type common key block cipher process configuration having a plurality of stages (rounds).

A configuration which applies the three different matrices $M_0$, $M_1$ and $M_2$ so that the following conditions (a) and (b):

(a) $M_0$, $M_1$ and $M_2$ are arranged in the order of $M_0$, $M_1$ and $M_2$ at the odd-numbered stages, and
(b) $M_0$, And $M_2$ are arranged in the order of $M_0$, $M_1$ And $M_2$ at the even-numbered stages from the last stage

as illustrated in FIG. 5 are satisfied is used. It is to be noted that the order of $M_0$, $M_1$ and $M_2$ may be reversed. In particular, that the three different matrices of $M_0$, $M_1$ and $M_2$ are included in three successive ones of the odd-numbered stages without fail and, also when the even-numbered stages are viewed from the last stage, the three different matrices of $M_0$, $M_1$ and $M_2$ are included in three successive ones without fail makes a condition that the withstanding property against attacks such as a difference analysis can be raised.

The condition (a) is a) a condition for arranging $M_0$, $M_1$ and $M_2$ in the order of $M_0$, $M_1$ and $M_2$ at the odd-numbered stages, and the matrices $M_0$, $M_1$ and $M_2$ are arranged in the order of the rounds 1, 3, 5, ... as seen in FIG. 5. The condition. (b) is (a) a condition for arranging $M_0$, $M_1$ and $M_2$ in the order of $M_0$, $M_1$ and $M_2$ at the even-numbered stages from the last stage, and the matrices $M_0$, $M_1$ and $M_2$ are arranged in the order of the rounds 12, 10, 8, ... as seen in FIG. 5. Here, the matrices $M_0$, $M_1$ and $M_2$ are different linear conversion matrices executed in the F function in the rounds.

By adopting a configuration that different matrices are arranged in a particular order to execute the F function as described above with reference to FIGS. 4 and 5, a Feistel type cipher which has a raised withstanding property against attacks such as a difference analysis and has higher safety is implemented. It is to be noted that, details of this configuration and process are described in the preceding Japanese patent application: Japanese Patent Application No. 2005-313842 by the same applicant as that of the present invention.

Furthermore, a linear conversion process to be applied in such Feistel type ciphers wherein a plurality of different linear conversion matrices as described above with reference to FIGS. 4 and 5 are set preferably utilizes matrices having a particular characteristic in order to keep fixed cipher strength. Upon evaluation and setting of such linear conversion matrices, such evaluation references as optimal diffusion mappings and sub optimal diffusion mappings can be used.

A definition of the optimal diffusion mappings and the sub optimal diffusion mappings is described. Where the three different matrices described hereinabove with reference to FIG. 5 are $M_0$, $M_1$ and $M_2$, $M_0$, $M_1$ and $M_2$ are defined as matrices having an ODM-MR (Optimal Diffusion Mappings across Multiple Rounds) structure when all of four matrices of $\{M_0 \mid \mid M_1 \mid \mid M_2\}$, $\{{}^tM_0{}^{-1} \mid \mid {}^tM_1{}^{-1}\}$, $\{{}^tM_0{}^{-1} \mid \mid {}^tM_2{}^{-1}\}$ and $\{{}^tM_1{}^{-1} \mid \mid {}^tM_2{}^{-1}\}$ are optimal diffusion conversion (Optimal Diffusion Mappings). It is to be noted that $\mid \mid$ represents connection, ${}^tM$ a transposed matrix, and $M^{-1}$ an inverse matrix.

Further, where the three different matrices described hereinabove with reference to FIG. 5 are $M_0$, $M_1$ and $M_2$, $M_0$, $M_1$ and $M_2$ are defined as matrices having an SDM-MR (Sub optimal Diffusion Mappings across Multiple Rounds) structure when any one of the four matrices of $\{M_0 \mid \mid M_1 \mid \mid M_2\}$, $\{^tM_0^{-1} \mid \mid tM_1^{-1}\}$, $\{^tM_0^{-1} \mid \mid ^tM_2^{-1}\}$ and $\{^tM_1^{-1} \mid \mid ^tM_2^{-1}\}$ is sub optimal diffusion mappings.

It is to be noted that, where the three different matrices are defined as $M_0$, $M_1$ and $M_2$, in order to satisfy the ODM-MR or the SDM-MR, that the arrangement order of the three different matrices $M_0$, $M_1$ and $M_2$ is set to the arrangement order described hereinabove with reference to FIG. 5, that is, the three different matrices $M_0$, $M_1$ and $M_2$ are arranged so as to satisfy the following conditions (a) and (b):

(a) $M_0$, $M_1$ and $M_2$ are arranged in the order of $M_0$, $M_1$ and $M_2$ at the odd-numbered stages, and
(b) $M_0$, $M_1$ and $M_2$ are arranged in the order of $M_0$, $M_1$ and $M_2$ at the even-numbered stages from the last stage

is set as a condition. It is to be noted that the order of $M_0$, And $M_2$ may be reversed as described hereinabove. In particular, that the three different matrices of $M_0$, $M_1$ and $M_2$ are included in three successive ones of the odd-numbered stages without fail and the three different matrices of $M_0$, $M_1$ and $M_2$ are included in three successive ones of the even-numbered stages without fail also when the even-numbered stages are viewed from the last stage makes a condition that the matrix array satisfies the ODM-MR or the SDM-MR and the withstanding property against attacks such as a difference analysis can be raised.

Meanwhile, where the two different matrices are defined as $M_0$ and $M_1$, in order to satisfy the ODM-MR or the SDM-MR, that the arrangement order of the two different matrices $M_0$ and $M_1$ is set to the arrangement order described hereinabove with reference to FIG. 4, that is, the two different matrices $M_0$ and $M_1$ are arranged so as to satisfy the following conditions (a) and (b):

(a) $M_0$ and $M_1$ are arranged in the order of $M_0$ and $M_1$ at the odd-numbered stages, and
(b) $M_0$ and $M_1$ are arranged in the order of $M_0$ and $M_1$ at the even-numbered stages from the last stage

is set as a condition. It is to be noted that the order of $M_0$ and May be reversed as described hereinabove. In particular, that the same matrix does not appear successively in the odd-numbered stages and the same matrix does not appear successively in the even-numbered stages also when the even-numbered stages are viewed from the last stage makes a condition that the matrix array satisfies the ODM-MR or the SDM-MR and the withstanding property against attacks such as a difference analysis can be raised.

In this manner, by setting, in a Feistel type cipher configuration which utilizes a plurality of different matrices, linear conversion matrices to be applied in different rounds to an ODM-MR structure or an SDM-MR structure, a cipher process having high safety can be implemented.

[5. Configuration Which Facilitates Change of the Round Number in a Feistel Type Cipher Having an SP Type F function Which Utilizes a Plurality of Different Transform Matrices]

Now, a configuration which facilitates change of the round number in a Feistel type cipher having an SP type F function which utilizes a plurality of different conversion matrices is described.

In a common key block cipher, preferably the process round number (stage number) can be increased or decreased flexibly because the speed and the safety have a trade-off relationship therebetween. Usually, the speed and the safety have a relationship that, if the round number (stage number) increases, then the safety increases while the speed drops, but if the stage number decreases, then the safety decreases while the speed rises. Accordingly, where priority is placed on the processing speed, where priority is placed on the safety or in a like case, it is demanded to adopt a configuration which allows the process round number to be changed flexibly in response to an application.

Also it is demanded to change the process round number in response to the size of a secret key to be applied to a cipher process which applies a Feistel type cipher. For example, where the size of a secret key to be applied to a cipher process is to be changed, in order to secure sufficient safety, it is desirable to appropriately change the process round number in accordance with the size of the secret key. For example, where an AES cipher algorithm is to be executed, it is demanded to vary the process round number together with the size of a secret key such that, when the size of the secret key to be applied is 128 bits, the process round number is set to 10 stages, but where the size is 192 bits, the process round number is set to 12 stages and where the size is 256 bits, the process round number is set to 14 stages thereby to set the round number with which key configuring bit data for the size of the secret key can be utilized effectively.

Also where a Feistel structure common key block cipher having an SP type F function wherein a matrix having the ODM-MR structure or the SDM-MR structure described hereinabove is applied to linear conversion is to be built up, it is desirable to maintain the above-described involution property. However, when different F functions which include different linear conversion matrices are to be arranged, they must be arranged under the restrictions described hereinabove with reference to FIG. 4 or 5.

It is to be noted that, in the following description, an F function which uses the linear conversion matrix $M_0$ is represented by $F_0$, another F function which uses the linear conversion matrix $M_1$ by $F_1$, and a further F function which uses the linear conversion matrix $M_2$ by $F_2$.

Where the F functions $F_0$, And $F_2$ which utilize the three different matrices $M_0$, $M_1$ and $M_2$ are utilized, it is necessary to arrange the F functions $F_0$, $F_1$ and $F_2$ which apply the three different matrices $M_0$, $M_1$ and $M_2$ so that the following conditions (a) and (b):

(a) where the odd-numbered rounds are selected from the top, $F_0$, $F_1$, $F_2$, $F_0$, $F_1$

Similarly, where the F functions $F_0$ and $F_1$ which utilize the two different matrices $M_0$ and $M_1$ are utilized, it is necessary to arrange the F functions $F_0$ and $F_1$ which apply the two different matrices $M_0$ and $M_1$ so that the following conditions (a) and (b):

(a) where the odd-numbered rounds are selected from the top, $F_0$, $F_1$, $F_0$, $F_1$, $F_0$, ... are arranged in this order, and
(b) where the even-numbered rounds are selected from the bottom, $F_1$, $F_0$, $F_1$, $F_0$, .... are arranged in this order

may be satisfied as described hereinabove with reference to FIG. 4. It is to be noted that, as described hereinabove, the order of $F_0$ and May be reversed. In particular, that the two different F functions $F_0$ and $F_1$ are successively included in the odd-numbered stages such that the same matrix is not successively included in the odd-numbered stages and the two different F functions $F_0$ and $F_1$ are successively included in the even-numbered stages such that the same matrix is not successively included in the even-numbered stages also when the even-numbered stages are viewed from the last stage makes a condition that the matrix array satisfies the ODM-MR or the SDM-MR and the withstanding property against attacks such as a difference analysis can be raised.

Further, in order to maintain, in a Feistel type cipher which applies F functions which utilize a plurality of different matrices, the involution property, that is, the involution property that an encryption function and a decryption function can be carried out by the same circuit only by reversing the order of use of round keys to be used as described above, it is necessary for the arrangement order of the F functions in the rounds of a Feistel type cipher from the and the arrangement order from the bottom to be same as each other.

In this manner, in the Feistel type cipher,
the condition of maintaining the involution property and
the condition that, where a Feistel type cipher configuration which applies different F functions which utilize a plurality of different linear conversion matrices is used, also as regards the array thereof, the matrix array satisfies such an ODM-MR or an SDM-MR as described above are required in order to maintain the withstanding property against cipher attacks such as a difference analysis.

In a Feistel type cipher configuration which applies different F functions which utilize a plurality of different linear conversion matrices, it is necessary to satisfy such conditions as described above, and where a cipher process configuration is to be designed, it is a practise to determine a round number in advance and determine arrangement of different F functions having a plurality of different linear conversion matrices in accordance with the determined fixed round number. As a result, with the fixed round number, it is possible to carry out designing which satisfies the two conditions of the involution property and the matrix arrangement which satisfies the ODM-MR or the SDM-MR. However, there is a problem that it is not easy to take a countermeasure for variation of the round number.

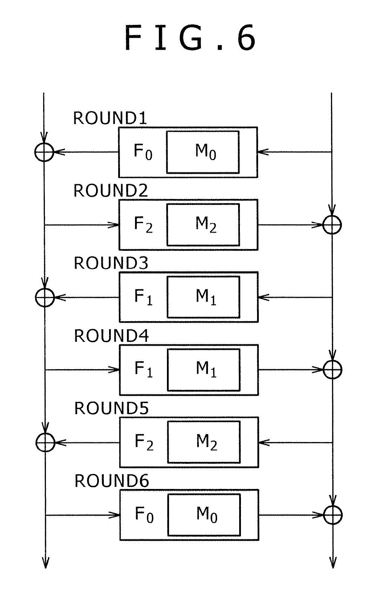

For example, where an ODM-MR structure Feistel cipher which utilizes three different matrices is assumed as a six-round (six-stage) configuration, it is necessary that the order of F functions to be arranged has such a setting as illustrated in FIG. 6. In particular, the F functions are set as

$$[\, F_0 \; \rightarrow \; F_2 \; \rightarrow \; F_1 \; \rightarrow \; F_1 \; \rightarrow \; F_2 \; \rightarrow \; F_0 \,]$$

from the top as seen in FIG. 6.

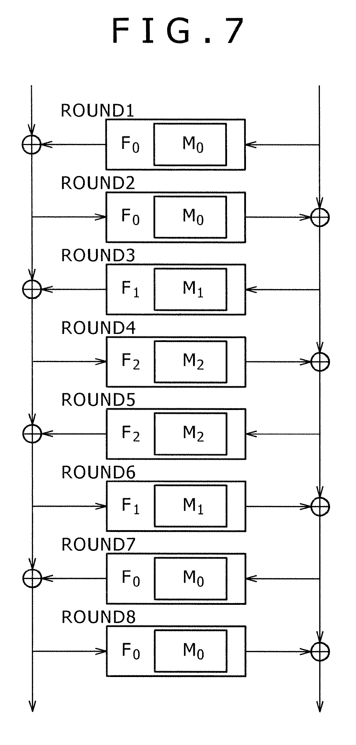

Further, in the case of an ODM-MR structure Feistel cipher of an eight-stage configuration, it is necessary that the order of F functions to be arranged is set in such a manner as seen in FIG. 7. In particular, the F functions are set as

$$[\, F_0 \; \rightarrow \; F_0 \; \rightarrow \; F_1 \; \rightarrow \; F_2 \; \rightarrow \; F_2 \; \rightarrow \; F_1 \; \rightarrow \; F_0 \; \rightarrow \; F_0 \,]$$

from the top as seen in FIG. 7.

Although it is possible to carry out designing so as to satisfy the two conditions of the involution property and the matrix arrangement which satisfies the ODM-MR or the SDM-MR individually for each of the round numbers, it is not easy to change the six-stage configuration to an eight-stage configuration. In particular, since the ODM-MR structure Feistel ciphers of the six-stage configuration and the eight-stage configuration are much different in the order of F functions from each other, the number of places which can be re-utilized is very small. For example, it is assumed that such hardware in which an ODM-MR structure Feistel cipher of the six-stage configuration is incorporated already as seen in FIG. 6 is manufactured already. Here, if it is demanded to use such an ODM-MR structure Feistel cipher of the eight-stage configuration as illustrated in FIG. 7, then the hardware of the ODM-MR structure Feistel cipher of the six-configuration shown in FIG. 6 can be hardly utilized, and there is a problem that it becomes necessary to produce the hardware of the ODM-MR structure Feistel cipher of the eight-state configuration illustrated in FIG. 7. Alternatively, such a process as to carry out change of software as a processing program is required.

In the following, examples of a configuration for reducing such a processing burden as described above are described. In particular, a configuration which allows, in a Feistel cipher process configuration having an ODM-MR structure or an SDM-MR structure, change of the round number such as increase or decrease of the process round number to be carried out efficiently is described.

(Process Example 1) Process Example Wherein a Function is Added to a Feistel cipher process Basic Unit

First, description is given of a process configuration of increasing the round number by adding an F function to a Feistel cipher process basic unit set in advance, that is, a Feistel cipher process basic unit having a configuration which satisfies the two conditions of the involution property and the matrix array which satisfies the ODM-MR or SDM-MR.

As an example, an ODM-MR structure Feistel cipher of the six-stage configuration having a configuration which satisfies the two conditions of the involution property and the matrix array which satisfies the ODM-MR or SDM-MR is determined as a cipher process basic unit as a base. Here, it is assumed that the Feistel cipher process basic unit is composed of the different F functions $F_0$, $F_1$ and $F_2$ which have three different linear conversion matrices. The basic cipher process basic unit has arrangement of the F functions of

$$[F_0 \rightarrow F_2 \rightarrow F_1 \rightarrow F_1 \rightarrow F_2 \rightarrow F_0]$$

from the top as described hereinabove with reference to FIG. 6 and has a configuration which satisfies the two conditions of the involution property and the matrix array which satisfies the ODM-MR or SDM-MR.

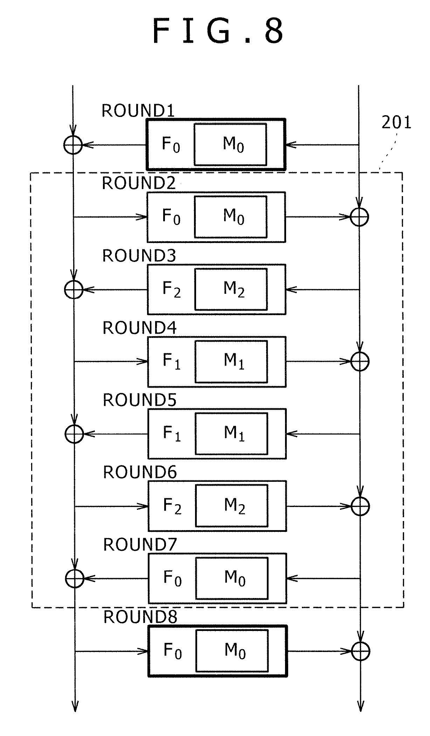

A process of changing the configuration of the ODM-MR structure Feistel cipher of the six-stage configuration into an eight-round (stage) configuration is described. Where the six-stage configuration is to be changed to the eight-stage configuration, the F function of $[F_0]$ is added to the top and the bottom of a cipher process basic unit 201 of the six-stage configuration having the array of $[F_0 \rightarrow F_2 \rightarrow F_1 \rightarrow F_1 \rightarrow F_2 \rightarrow F_0]$ as seen in FIG. 8.

By the addition of the F function $[F_0]$, the Feistel cipher configuration is changed to the eight-round (stage) configuration as seen in FIG. 8, and the arrangement order of the F functions is set from the top as

$$[F_0 \rightarrow F_0 \rightarrow F_2 \rightarrow F_1 \rightarrow F_1 \rightarrow F_2 \rightarrow F_0 \rightarrow F_0]$$

In this eight-stage configuration, the arrangement order of the F functions becomes, where the odd-numbered stages are selected from the top thereof,

$$[F_0 \rightarrow F_2 \rightarrow F_1 \rightarrow F_0]$$

and becomes, where the even-numbered stages are selected from the bottom,

$$[F_0 \rightarrow F_2 \rightarrow F_1 \rightarrow F_0]$$

In the Feistel cipher configuration of this eight-stage configuration, the arrangement order of the F functions in the rounds from the top and the arrangement order from the bottom are same as each other, and accordingly, the involution property is satisfied. Further, the F functions $F_0$, $F_1$ and which utilize the three different matrices $M_0$, $M_1$ and $M_2$ are included in three successive ones of the odd-numbered stages without fail, and also when the even-numbered stages are viewed from the last stage, the three different F functions $F_0$, $F_1$ and $F_2$ which apply the three different matrices $M_0$, $M_1$ and $M_2$ are included in three successive ones of the even-numbered stages without fail. Therefore, it has a matrix array which satisfies the ODM-MIR or the SDM-MR.

The selection condition of an F function in this instance is

to select an F function which provides such setting that the F functions $F_0$, $F_1$ and $F_2$ which utilize the three different matrices $M_0$, $M_1$ and $M_2$ are included in three successive ones of the odd-numbered stages and, also when the even-numbered stages are viewed from the last stage, the three different F functions $F_0$, and $F_2$ which apply the three different matrices $M_0$, $M_1$ and $M_2$ are included in three successive ones.

If an F function to be added is selected in accordance with the selection condition described above, then in the round number addition process from six stages to eight stages illustrated in FIG. 8, the F function to be added is the F function $[F_0]$, and an ODM-MR structure Feistel cipher of a six-stage configuration can be converted into another Feistel cipher of an eight-round (stage) configuration having the involution property and a matrix array which satisfies the ODM-MR or the SDM-MR.

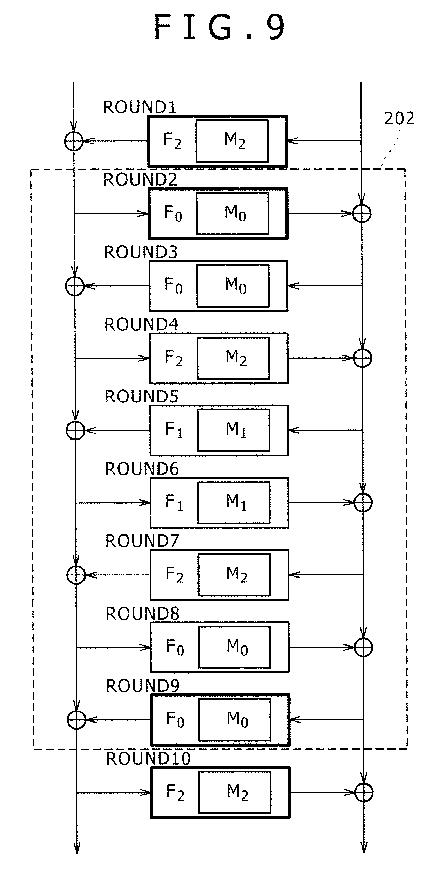

Further, a process example where the stage number of the Feistel cipher configuration of the eight-round (stage) configuration having the involution property and the matrix array which satisfies the ODM-MR or the SDM-MR illustrated in FIG. 8 is to be changed to that of ten stages is described with reference to FIG. 9. Where the stage number is to be changed from eight stages to ten stages, the F function of $[F_2]$ is added to the top and the bottom of a cipher process basic unit 202 of an eight-stage configuration having an array of $[F_0 \rightarrow F_0 \rightarrow F_2 \rightarrow F_1 \rightarrow F_1 \rightarrow F_2 \rightarrow F_0 \rightarrow F_0]$ as seen in FIG. 9.

By the addition of the F function $[F_2]$, the Feistel cipher configuration is changed to a ten-round (stage) configuration as seen in FIG. 9, and the arrangement order of the F functions is set from the top as

$$[F_2 \rightarrow F_0 \rightarrow F_0 \rightarrow F_2 \rightarrow F_1 \rightarrow F_1 \rightarrow F_2 \rightarrow F_0 \rightarrow F_0 \rightarrow F_2]$$

In the present ten-stage configuration, the arrangement order of the F functions is

$$[F_2 \rightarrow F_0 \rightarrow F_1 \rightarrow F_2 \rightarrow F_0]$$

where the odd-numbered stages are selected from the top, and is

$$[F_2 \rightarrow F_0 \rightarrow F_1 \rightarrow F_2 \rightarrow F_0]$$

where the even-numbered stages are selected from the bottom.

In the Feistel cipher configuration of this ten-stage configuration, the arrangement order of the F functions in the rounds from the top and the arrangement order from the bottom are same as each other, and accordingly, the involution property is satisfied. Further, the F functions $F_0$, $F_1$ and $F_2$ which utilize the three different matrixes, and $M_2$ are included in three successive ones of the odd-numbered stages without fail, and also when the even-numbered stages are viewed from the last stage, the three different F functions $F_0$, And $F_2$ which apply the three different matrices $M_0$, $M_1$ and $M_2$ are included in three successive ones without fail. Therefore, it has a matrix array which satisfies the ODM-MIR or the SDM-MR.

Also the selection condition of an F function in this instance is similar to that upon change from six states to eight stages, and this is to select an F function which provides such setting that the F functions $F_0$, $F_1$ and $F_2$ which utilize the three different matrices $M_0$, $M_1$ and $M_2$ are included in three successive ones of the odd-numbered stages and, also when the even-numbered stages are viewed from the last stage, the three different F functions $F_0$, $F_1$ and $F_2$ which apply the three different matrices $M_0$, $M_1$ and $M_2$ are included in three successive ones without fail.

If an F function to be added is selected in accordance with this selection condition, then in the round number addition process from eight stages to ten stages illustrated in FIG. 9, the F function to be added is the F function $[F_2]$, and an ODM-MR structure Feistel cipher of an eight-stage configuration can be converted into another Feistel cipher of a ten-round (stage) configuration having the involution property and a matrix array which satisfies the ODM-MR or the SDM-MR.

In this manner, where a Feistel cipher configuration of an n-round (stage) configuration having an involution property set in advance and a matrix array which satisfies the ODM-MR or the SDM-MR is to be changed to another Feistel cipher configuration of an n + 2-round (stage) configuration, by selecting an F function which provides such setting that the F function, $F_1$ and $F_2$ which utilize the three different matrices $M_0$, and $M_2$ are included in three successive ones of the odd-numbered stages without fail and, also when the even-numbered stages are viewed from the last stage, the three different F functions $F_0$, $F_1$ and $F_2$ which apply the three different matrices $M_0$, $M_1$ and $M_2$ are included in three successive ones without fail and adding the selected F function to the top and the bottom of the F functions, a Feistel cipher configuration of an n+2-round (stage) configuration having the involution property and a matrix array which satisfies the ODM-MR or the SDM-MR can be constructed.

By carrying out an addition process of an F function so as to satisfy such a condition as described above, that is, a process of adding an appropriate F function to the top stage and the bottom stage of a Feistel cipher configuration unit of an n-round (stage) configuration having the involution property and a matrix array which satisfies the ODM-MR or the SDM-MR, it is possible to re-utilize the functions prior to the change as they are except the added functions, and increase or decrease of the stage number can be carried out efficiently for each two stages.

By such a process as described above, the process round number of an ODM-MR or SDM-MR structure Feistel cipher can be increased or decreased for each two stages efficiently while maintaining the involution property of the same. Further, even if the F functions additionally set to the top and the bottom are removed by one from the top and the bottom, the Feistel cipher configuration unit of an n-round (stage) configuration having the involution property and a matrix array which satisfies the ODM-MR or the SDM-MR remains. Therefore, it is possible to cope not only with increase of the number of rounds but also with round number decrease down to the original cipher process basic unit level.

It is to be noted that, while the process example described above is given with regard to the configuration example which includes three F functions $F_0$, $F_1$ and $F_2$ having three different linear conversion matrices, also with a configuration which includes two F functions $F_0$ and $F_1$ having two different linear conversion matrices, increase of the round number can be implemented by a similar process.

The condition where increase of the round number is to be carried out for a Feistel cipher configuration which includes two F functions $F_0$ and $F_1$ having two different linear conversion matrices is such as described below. Where a Feistel cipher configuration of an n-round (stage) configuration having the involution property and a matrix array which satisfies the ODM-MR or the SDM-MR set in advance is to be converted into a Feistel cipher configuration of an n + 2-round (stage) configuration, if an F function which provides such setting that the F functions $F_0$ and $F_1$ which utilize the two different matrices $M_0$ and $M_1$ are included in two successive ones of the odd-numbered stages without fail and, also when the even-numbered stages are viewed from the last stage, the two different F functions $F_0$ and $F_1$ which apply the two different matrices $M_0$ and $M_1$ are included in two successive ones is selected and added to the top and the bottom, then a Feistel cipher configuration of an n + 2-round (stage) configuration having the involution property and a matrix array which satisfies the ODM-MR or the SDM-MR can be constructed.

(Process Example 2) Process Example Wherein a Plurality of Feistel cipher process Basic Units are Utilized

In the process example described above, an F function is added one by one to the top and the bottom of a Feistel cipher process basic unit as a base to construct a Feistel cipher process configuration having two increased rounds. Now, a process example wherein a plurality of Feistel cipher process basic units as bases are combined to change the round number is described.

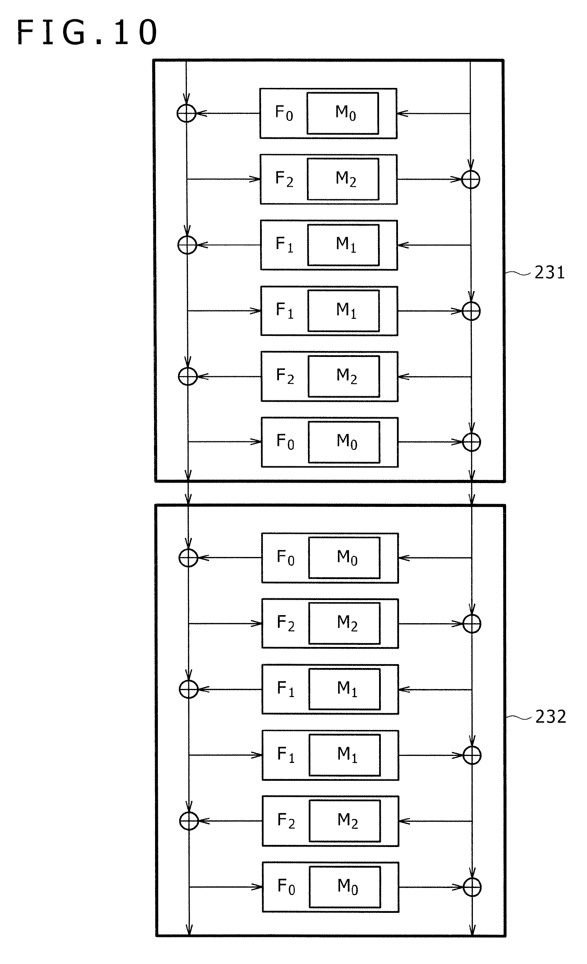

A process example wherein a plurality of Feistel cipher process basic units as bases are combined to change the round number is described with reference to FIG. 10. Each of Feistel cipher process basic units 231 and 232 illustrated in FIG. 10 has arrangement of F functions of

$$[\text{F}_0 \rightarrow \text{F}_2 \rightarrow \text{F}_1 \rightarrow \text{F}_1 \rightarrow \text{F}_2 \rightarrow \text{F}_0]$$

from the top, and is a Feistel cipher process basic unit of a six-stage configuration having a configuration which satisfies the two conditions of the involution property and the matrix array which satisfies the ODM-MR or the SDM-MR.

In the configuration illustrated in FIG. 10, the two six-stage Feistel cipher process basic units 231 and 232 are used to set a Feistel cipher process configuration of a 12-stage configuration. In the Feistel cipher configuration of the 12-stage configuration illustrated in FIG. 10, the arrangement of the F functions is

$$[F_0 \rightarrow F_2 \rightarrow F_1 \rightarrow F_1 \rightarrow F_2 \rightarrow F_0 \rightarrow F_0 \rightarrow F_2 \rightarrow F_1 \rightarrow F_1 \rightarrow F_2$$
$$\rightarrow F_0]$$

from the top.

In the case of this 12-stage configuration, the arrangement order of the F functions is, where the odd-numbered stages are selected from the top,

$$[F_0 \rightarrow F_1 \rightarrow F_2 \rightarrow F_0 \rightarrow F_1 \rightarrow F_2]$$

and is, where the even-numbered stages are selected from the bottom,

$$[F_0 \rightarrow F_1 \rightarrow F_2 \rightarrow F_0 \rightarrow F_1 \rightarrow F_2]$$

In this Feistel cipher configuration of the 12-stage configuration, the arrangement order of the F functions in the rounds from the top and the arrangement order from the bottom are same as each other, and accordingly, the involution property is satisfied. Further, the F functions $F_0$, and $F_2$ which utilize the three different matrices $M_0$, $M_1$ and $M_2$ are included in three successive ones of the odd-numbered stages without fail, and also when the even-numbered stages are viewed from the last stage, the three different F functions $F_0$, $F_1$ and $F_2$ which apply the three different matrices $M_0$, $M_1$ and $M_2$ are included in three successive ones without fail. Therefore, the Feistel cipher configuration of the 12-stage configuration described above has a matrix array which satisfies the ODM-MIR or the SDM-MR.

While an example wherein two six-stage units are connected to each other to produce a Feistel cipher configuration of a 12-stage configuration is illustrated in FIG. 10, by connecting a large number of six-stage units such as three, four, ..., it is possible to form Feistel cipher configurations of 18 stages and 24 stages similarly, that is, to form Feistel cipher configurations which have an ODM-MR structure and maintain the involution property.

By combining a plurality of (k) n-stage Feistel cipher process basic units having a configuration which satisfies the two conditions of the involution property and a matrix array which satisfies the QDM-MR or the SDM-MR in this manner, a k x n-stage Feistel cipher process configuration which satisfies the two conditions of the involution property and a matrix array which satisfies the ODM-MR or the SDM-MR can be constructed.

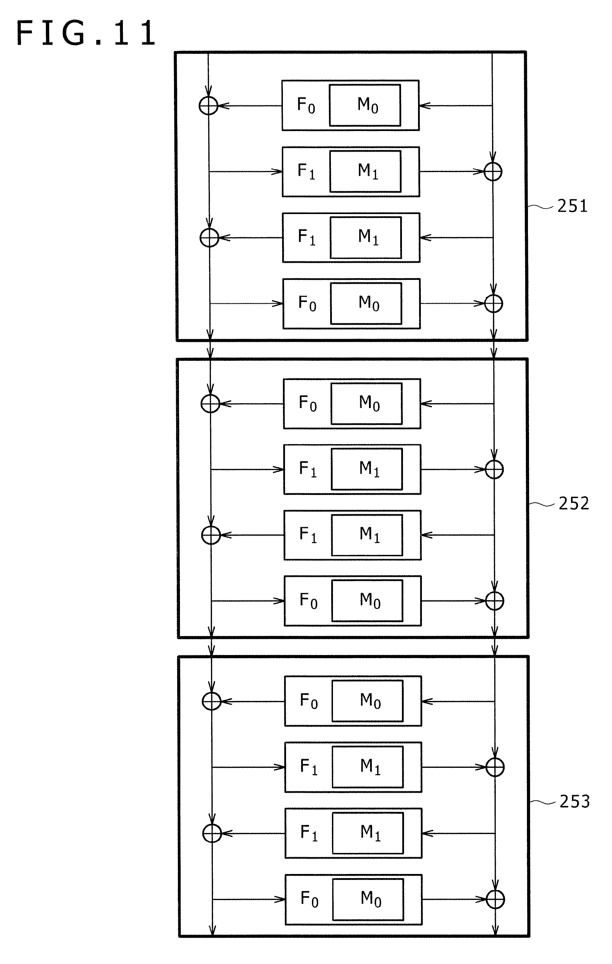

A process example which carries out change of the round number by combining a plurality of cipher process basic units each formed from an ODM-MR or SDM-MR structure Feistel cipher process configuration which uses the two different matrices $M_0$ and $M_1$ similarly is described. Each of Feistel cipher process basic units 251, 252 and 253 illustrated in FIG. 11 is a Feistel cipher process basic unit of a four-stage configuration having a configuration which has arrangement of the F functions as

$$[F_0 \rightarrow F_1 \rightarrow F_1 \rightarrow F_0]$$

from the top and satisfies the two conditions of the involution property and a matrix array which satisfies the ODM-MR or the SDM-MR.

The configuration illustrated in FIG. 11 is a Feistel cipher process configuration of a 12-stage configuration set using the three four-stage Feistel cipher process basic units 251, 252 and 253. In the Feistel cipher configuration of the 12-stags configuration illustrated in FIG. 11, the arrangement of the F functions is

$$[F_0 \rightarrow F_1 \rightarrow F_1 \rightarrow F_0 \rightarrow F_0 \rightarrow F_1 \rightarrow F_1 \rightarrow F_0 \rightarrow F_0 \rightarrow F_1 \rightarrow F_1 \rightarrow F_0]$$

from the top.

In the case of the present 12-stage configuration, the arrangement order of the F function is, where the odd-numbered stages are selected from the top,

$$[F_0 \rightarrow F_1 \rightarrow F_0 \rightarrow F_1 \rightarrow F_0 \rightarrow F_1]$$

and is, where the even-numbered stages are selected from the top,

$$[F_0 \rightarrow F_1 \rightarrow F_0 \rightarrow F_1 \rightarrow F_0 \rightarrow F_1]$$

In the present Feistel cipher configuration of the 12-stage configuration, the arrangement order of the F functions in the rounds from the top and the arrangement order from the bottom are same as each other, and accordingly, the involution property is satisfied. Further, the F functions $F_0$ and $F_1$ which utilize the two different matrices $M_0$ and $M_1$ are included in two successive ones of the odd-numbered stages without fail, and also when the even-numbered stages are viewed from the last stage, the two different F functions $F_0$ and $F_1$ which apply the two different matrices $M_0$ and $M_1$ are included in two successive ones without fail. Therefore, the configuration has a matrix array which satisfies the ODM-MIR or the SDM-MR.

While FIG. 11 shows an example wherein a Feistel cipher configuration of a 12-stage configuration is produced by connecting three four-stage units, by connecting a large number of four-stage units such as four, five, ..., it is possible to form Feistel cipher configurations of 16 stages and 20 stages similarly, that is, to form Feistel cipher configurations which have an ODM-MR structure and maintain the involution property as well.

In this manner, also by combining a plurality of (k) n-stage Feistel cipher process basic units having a configuration which satisfies the two conditions of the involution property and a matrix array which satisfies the ODM-MR or the SDM-MR, a k x n-stage Feistel cipher process configuration which satisfies the two conditions of the involution property and a matrix array which satisfies the ODM-MR or the SDM-MR can be constructed.

For example, in a mounting process in an information processing apparatus which executes a cipher process, for example, of an IC card, by mounting, for example, only one six-stage configuration ODM-MR structure Feistel cipher process basic unit described hereinabove with reference to FIG. 10 as hardware in advance, setting a processing program which allows selection of the number of times of use and executing the processing program the number of times of whose use is changed in response to an application, the cipher process of the round number selected in response to various data processes can be executed and an apparatus which allows increase and decrease of the process round number can be implemented at a low cost.

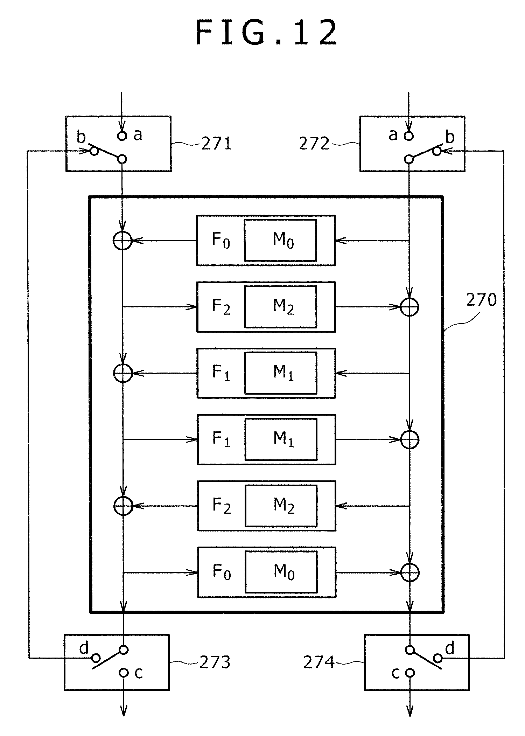

A particular example is described with reference to FIG. 12. In FIG. 12, a cipher process is executed. A Feistel cipher process basic unit 270 of a six-stage configuration and switches 271 to 274 are shown. It is to be noted that the switches 271 to 274 may be configured so as to carry out control of executing a process similar to a switch on software even where they are set as hardware.

The Feistel cipher process basic unit 270 of the 6-stage configuration illustrated in FIG. 12 has, similarly as described hereinabove with reference to FIG. 6 or 10, arrangement of the F functions as

$$[F_0 \rightarrow F_2 \rightarrow F_1 \rightarrow F_1 \rightarrow F_2 \rightarrow F_0]$$

from the top, and is a Feistel cipher process basic unit of a six-stage configuration having a configuration which satisfies the two conditions of the involution property and a matrix array which satisfies the ODM-MR or the SDM-MR.

The switches 271 to 274 are controlled by control of a control section not shown. Upon inputting of initial data, the switches 271 and 272 are set to the [a] side, and for example, plaintext data $P_L$ and $P_R$ are inputted and a Feistel cipher process of six rounds is executed by the Feistel cipher process basic unit 270 of the six-stage configuration. A result of the process is outputted where the switches 273 and 274 are set to the [c] side.

Where a Feistel cipher process of six rounds is executed, the switches 273 and 274 are set to the [c] side, and a result of the process is outputted. For example, where the setting is such that a cipher process of 12 rounds is to be executed, the switches 273 and 274 are set to the [d] side while the switches 271 and 272 are set to the [b] side by the control of the control section. As a result, a result of the process of six rounds executed by the Feistel cipher process basic unit 270 of the six-stage configuration is inputted to the top stage of the Feistel cipher process basic unit 270 of the six-stage configuration, and a cipher process by the F functions of further +6 rounds is executed.

Where the cipher process is process setting of 12 rounds, the switches 273 and 274 are set to the [c] side later and then a result is outputted. Where an F function process of further 18, 24, ... rounds is to be executed, the switches 273 and 274 are set to [d], and after the predetermined process rounds end, the switches 273 and 274 are set to the [c] side and a result is outputted. By forming a cipher process basic unit as a base, that is, a Feistel cipher process basic unit of an n-stage configuration having a configuration which satisfies the two conditions of the involution property and a matrix array which satisfies the ODM-MR or the SDM-MR, in a cipher process apparatus of an IC card or the like such that the number of repetitions of a process which utilizes the unit can be selected by a program executed by a control section such as a CPU, cipher process operation of an optimum round number suitable for individual data processes can be carried out.

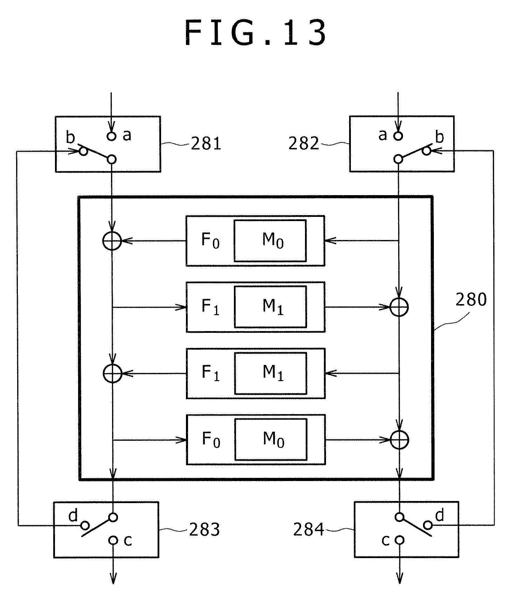

FIG. 13 shows an example of a configuration which utilizes two kinds of matrices. A Feistel cipher process basic unit 280 of a four-stage configuration and switches 281 to 2874 are shown. The Feistel cipher process basic unit 280 of the three-stage configuration illustrated in FIG. 13 is, similarly as described hereinabove with reference to FIG. 11, a Feistel cipher process basic unit of a four-stage configuration having a configuration which has arrangement of the F functions as

$$[F_0 \rightarrow F_1 \rightarrow F_1 \rightarrow F_0]$$

from the top and satisfies the two conditions of the involution property and a matrix array which satisfies the ODM-MR or the SDM-MR.

The switches 281 to 284 are controlled by control of a control section not shown. Upon inputting of initial data, the switches 281 and 282 are set to the [a] side, and, for example, plaintext data $P_L$ and $P_R$ is inputted and a Feistel cipher process of o rounds is executed by the Feistel cipher process basic unit 280 of the four-stage configuration. A result of the process is outputted where the switches 282 and 284 are set to the [c] side.

Where a Feistel cipher process of four rounds is executed, the switches 283 and 284 are set to the [c] side, and a result of the process is outputted. For example, where the setting is such that a cipher process of eight rounds is to be executed, the switches 283 and 284 are set to the [d] side while the switches 281 and 282 are set to the [b] side by the control of the control section. As a result, a result of the process of four rounds executed by the Feistel cipher process basic unit 280 of the four-stage configuration is inputted to the top stage of the Feistel cipher process basic unit 280 of the four-stage configuration, and a cipher process by the F functions of further +4 rounds is executed.

Where the cipher process is process setting of eight rounds, the switches 283 and 284 are set to the [c] side later and then a result is outputted. Where an F function process of further 12, 16, ... rounds is to be executed, the switches 283 and 284 are set to [d], and after the predetermined process rounds end, the switches 283 and 284 are set to the [c] side and a result is outputted. By forming a cipher process basic unit as a base, that is, a Feistel cipher process basic unit of an n-stage configuration having a configuration which satisfies the two conditions of the involution property and a matrix array which satisfies the ODM-MR or the SDM-MR, in a cipher process apparatus of an IC card or the like such that the number of repetitions of a process which utilizes the unit can be selected by a program executed by a control section such as a CPU, cipher process operation of an optimum round number suitable for individual data processes can be carried out.

[6. Example of a Configuration of a Cipher process Apparatus]

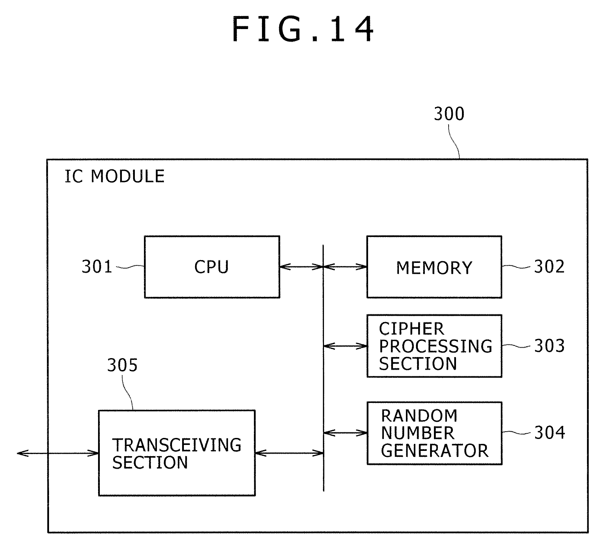

Now, an example of a configuration of an IC module 300 as a cipher process apparatus which executes a cipher process is described with reference to FIG. 14. A cipher process can be executed, for example, by a PC, an IC card, a reader/writer and various other information processing apparatus, and the IC module 300 shown in FIG. 14 indicates an example of a cipher process apparatus.

A CPU (Central Processing Unit) 301 shown in FIG. 14 is a processor which executes starting or ending of a cipher process, control of data transceiving, data transfer control between components and other various programs. A memory 302 is formed from a ROM (Read-Only-Memory) for storing programs to be executed by the CPU 301 or fixed data such as operation parameter, a RAM (Random Access Memory) used as a storage area for programs to be executed in processing of the CPU 301 and parameters which suitably vary in program processing and a working area, and so forth. Further, the memory 302 can be used as a storage region for key data necessary for a cipher process, a conversion table (exchange table) to be applied in a signal process, data to be applied to conversion matrices and so forth. It is to be noted that preferably the data storage region is configured as a memory having a tamper-proof configuration.

A cipher process section 303 executes an encryption process and a decryption process in accordance with, for example, a Feistel type common key block cipher process algorithm described hereinabove. It is to be noted here that, while an example wherein the cipher process means is an individual module is described, such a configuration that, without providing such an independent cipher process module, for example, a cipher process program is stored in a ROM and the CPU 301 reads out and execute the ROM-stored program.

A random number generator 304 executes a random number generation process which is required in generation of a key required for a cipher process or the like.

A transceiving section 305 is a data communication processing section which executes data communication with the outside, and executes data communication with an IC module such as, for example, a reader/writer and executes outputting of a cipher produced in the IC module, data inputting from an external apparatus such as an external reader/ writer and so forth.

In the present IC module 300, the cipher process section 303 may be configured such that it uses, for example, the cipher process basic unit shown in FIG. 12 or 13, that is, a Feistel cipher process basic unit of an n-stage configuration having a configuration which satisfies the two conditions of the involution property and a matrix array which satisfies the ODM-MR or the SDM-MR and the process round number is determined in accordance with the program executed by the CPU 3-1 as a control section and then a Feistel cipher process of the determined round number is executed.

[7. Example of a Configuration of a Cipher process Apparatus Manufacturing Apparatus]

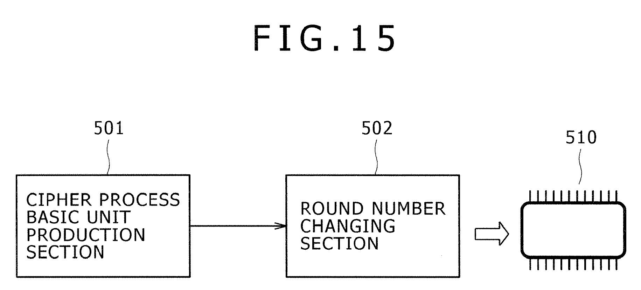

Now, an example of a configuration of a manufacturing apparatus for manufacturing, for example, the cipher process apparatus described hereinabove is described with reference to FIG. 15. The manufacturing apparatus for manufacturing the cipher process apparatus includes a cipher process basic unit production section 501 and a round number changing section 502 as shown in FIG. 15.

The cipher process basic unit production section 501 is a cipher process section which executes a Feistel type common key block cipher process of repeating an SP type F function, which executes a data conversion process including a nonlinear conversion process and a linear conversion process described hereinabove with reference to FIGS. 1 and 2, by a plurality of rounds. It produces a cipher process basic unit which has an involution property which makes it possible for an encryption function and a decryption function to be carried out by the same circuit only by reversing the order of use of round keys to be used and which includes a plurality of different F functions arrayed so as to satisfy an F function array condition set in advance. The cipher process basic unit is the cipher process basic unit described hereinabove, for example, with reference to FIG. 12 or 13.

The round number changing section 502 executes a process of applying the cipher process basic unit to select and add an F function which satisfies the F function array condition based on the round number of the cipher process section set in the cipher process apparatus to produce a cipher process apparatus 510.

The round number changing section 502 executes as with reference to FIGS. 8 and 9, prior to the top round and next to the last round which form the cipher process basic unit, a process of selecting and adding an F function which satisfies the F function array condition as described hereinabove. Alternatively, a plurality of cipher process basic units are connected to execute an F function addition process as described hereinabove with reference to FIG. 10 or 11.

It is to be noted that the F function array condition described above is an array condition that, where F functions of individual rounds included in the cipher process section which executes the Feistel type common key block cipher process include three F functions $F_0$, and $F_2$ to which three different matrices $M_0$, $M_1$ and $M_2$ are applied, when the odd-numbered rounds are successively selected from the top, the three different F functions $F_0$, $F_1$ and $F_2$ are included in three successive ones, but when the even-numbered rounds are selected from the last round, the three different F functions $F_0$, $F_1$ and are included in three successive ones.

Meanwhile, the F function array condition in a case wherein F functions in individual rounds included in the cipher process section which executes the Feistel type common key block cipher process include the two kinds of F functions $F_0$ and $F_1$ which apply the two different matrices $M_0$ and $M_1$ is an array condition that, when the odd-numbered rounds are successively selected from the top, the two different F functions $F_0$ and $F_1$ are included in two successive ones, but when the even-numbered rounds are selected from the last round, the two different F functions $F_0$ and $F_1$ are included in two successive ones.

Hereinbefore, the present invention has been described in detail with reference to the particular embodiments. However, it is apparent that a person skilled in the art can make modifications or alterations to the embodiment without departing from the scope of the present invention. In other words, the present invention has been disclosed in the form of illustration and shall not be interpreted restrictively. In order to decide the scope of the present invention, the claim should be referred to.

It is to be noted that, while the series of processes described in the specification can be executed by hardware, by software, or by a composite configuration of the two. Where the processes are executed by software, a program which records a processing sequence is installed into a memory in a computer incorporated in hardware for exclusive use and executed or, a program may be installed into and executed by a computer for universal use which can execute various processes.

For example, a program can be recorded in advance on a hard disk or in a ROM (Read Only Memory) as a recording medium. Alternatively, the program may be stored (recorded) temporarily or permanently on or in a removable recording medium such as a flexible disk, a CD-ROM (Compact Disc Read Only Memory), an MO (Magneto optical) disk, a DVD (Digital Versatile Disc) or a semiconductor memory. Such a removable recording medium can be provided as so-called package software.

It is to be noted that a program not only can be installed into such a removable recording medium as described above into the computer, but also can be transferred by radio communication from a download site to the computer or transferred by wire communication to the computer through a network such as a LAN (Local Area Network) or the Internet whereas the computer receives the program transferred in such a manner as just described and installs the program into a recording medium such as a hard disk built therein.

It is to be noted that the various processes described in the present specification may be processed in a time series in accordance with the description or may be executed parallelly or individually in accordance with the processing capacity of the apparatus which executes the process or as occasion demands. Further, in the present specification, the term system is used to represent a logical set configuration of a plurality of apparatus and is not limited to a system whose component apparatus are included in the same housing.

Industrial Applicability

As described above, with the configuration of the present invention, in the Feistel type common key block cipher process configuration which executes an SP type F function having a nonlinear conversion section and a linear conversion section repetitively by a plurality of rounds, a Feistel cipher configuration of an n-round configuration having an involution property set in advance and having a matrix array which satisfies an ODM-MR or an SDM-MR as an array condition of an F function set in advance is formed as a cipher process basic unit. Then, by a process of adding an F function selected under a condition setting that the array condition of the F function is satisfied to the citer process basic unit or by a process of connecting a plurality of such cipher process basic units, a Feistel cipher configuration which has an involution property and an array which satisfies the ODM-MR or the SDM-MR and has an increased number of rounds can be constructed.

**Claims**

1. A cipher process apparatus, comprising:

 a cipher process section configured to execute a Feistel type common key block cipher process which repeats an SP type F function of executing a data conversion process including a nonlinear conversion process and a linear conversion process by a plurality of rounds, said cipher process section having a cipher process basic unit having an involution property which allows an encryption function and a decryption function to be carried out by the same circuit only by reversing the order of use of round keys to be used and having an array of a plurality of different F functions which satisfies an F function array condition set in advance; and
 a control section configured to carry out execution control of cipher process operation in which the cipher process basic unit is utilized once or repetitively by a plural number of times based on utilization time number setting information of the cipher process basic unit configured in said cipher process section.

2. The cipher process apparatus according to claim 1, wherein
 the F function array condition is that,
 in a case that the F function of each round included in said cipher process section which executes the Feistel type common key block cipher process has a configuration which includes three kinds of F functions $F_0$, $F_1$ and $F_2$ which apply three different linear conversion matrices $M_0$, $M_1$ and $M_2$,
 where the odd-numbered rounds are successively selected from the top round, the three kinds of F function, $F_1$ and $F_2$ are included in three successive ones, but where the even-numbered rounds are selected from the last round, the three kinds of F functions $F_0$, $F_1$ and $F_2$ are included in three successive ones.

3. The cipher process apparatus according to claim 1, wherein
 the F function array condition is that,
 in a case that the F function of each round included in said cipher process section which executes the Feistel type common key block cipher process has a configuration which includes two kinds of F functions $F_0$ and Which apply two different linear conversion matrices $M_0$ and $M_1$,
 where the odd-numbered rounds are successively selected from the top round, the two kinds of F functions $F_0$ and $F_1$ are included in two successive ones, but where the even-numbered rounds are selected from the last round, the two kinds of F functions $F_0$ and $F_1$ are included in two successive ones.

4. A cipher process apparatus manufacturing apparatus, comprising:

a cipher process basic unit production section which is a cipher process section configured to execute a Feistel type common key block cipher process which repeats an SP type F function of executing a data conversion process including a nonlinear conversion process and a linear conversion process by a plurality of rounds, said cipher process basic unit production section having a cipher process basic unit having an involution property which allows an encryption function and a decryption function to be carried out by the same circuit only by reversing the order of use of round keys to be used and having an array of a plurality of different F functions which satisfies an F function array condition set in advance; and
a round number changing section configured to execute a process of applying the cipher process basic unit and select and add an F function which satisfies the F function array condition based on the round number of a cipher process section set in a cipher process apparatus.

5. The cipher process apparatus manufacturing apparatus according to claim 4, wherein
the F function array condition is that,
in a case that the F function of each round included in said cipher process section which executes the Feistel type common key block cipher process has a configuration which includes three different kinds of F functions $F_0$, $F_1$ and $F_2$ which apply three different linear conversion matrices $M_0$, $M_1$ and $M_2$,
where the odd-numbered rounds are successively selected from the top, the three kinds of F functions $F_0$, $F_1$ and $F_2$ are included in three successive ones, but where the even-numbered rounds are selected from the last round, the three kinds of F functions $F_0$, $F_1$ and $F_2$ are included in three successive ones.

6. The cipher process apparatus manufacturing apparatus according to claim 4, wherein
the F function array condition is that,
in a case that the F function of each round included in said cipher process section which executes the Feistel type common key block cipher process has a configuration which includes two different kinds of F functions $F_0$ and which apply two different linear conversion matrices $M_0$ and $M_1$,
where the odd-numbered rounds are successively selected from the top round, the two kinds of F functions $F_0$ and $F_1$ are included in two successive ones of the odd-numbered rounds, but where the even-numbered rounds are selected from the last round, the two kinds of F functions $F_0$ and $F_1$ are included in two successive ones.

7. The cipher process apparatus manufacturing apparatus according to claim 4, wherein
said round number changing section is configured so as to execute a process of selecting and adding an F function, which satisfies the F function array condition, successively one by one prior to the top round and next to the last round which compose the cipher process basic unit.

8. The cipher process apparatus manufacturing apparatus according to claim 4, wherein
said round number changing section is configured such that a plurality of such cipher process basic units are connected to execute the F function addition process.

9. A cipher process method, comprising:

a cipher process step of executing a Feistel type common key block cipher process which repeats an SP type F function of executing a data conversion process including a nonlinear conversion process and a linear conversion process by a plurality of rounds, the cipher process step including execution of a cipher process which utilizes a cipher process basic unit having an involution property which allows an encryption function and a decryption function to be carried out by the same circuit only by reversing the order of use of round keys to be used and having an array of a plurality of different F functions which satisfies an F function array condition set in advance; and
a control step of carrying out execution control of cipher process operation in which the cipher process basic unit is utilized once or repetitively by a plural number of times based on utilization time number setting information of the cipher process basic unit configured in the cipher process section.

10. The cipher process method according to claim 9, wherein
the F function array condition is that,
in a case that the F function of each round included in a cipher process section which executes the Feistel type common key block cipher process has a configuration which includes three kinds of F functions $F_0$, $F_1$ and $F_2$ which apply three different linear conversion matrices $M_0$, $M_1$ and $M_2$,
where the odd-numbered rounds are successively selected from the top, the three kinds of F functions $F_0$, $F_1$ and $F_2$ are included in three successive ones, but where the even-numbered rounds are selected from the last round, the three kinds of F functions $F_0$, $F_1$ and $F_2$ are included in three successive ones.

11. The cipher process method according to claim 9, wherein
the F function array condition is that,
in a case that the F function of each round included in a cipher process section which executes the Feistel type common key block cipher process has a configuration which includes two kinds of F functions $F_0$ and Which apply two different linear conversion matrices $M_0$ and $M_1$,
where the odd-numbered rounds are successively selected from the top round, the two kinds of F functions $F_0$ and $F_1$ are included in two successive ones, but where the even-numbered rounds are selected from the last round, the two kinds of F functions $F_0$ and $F_1$ are included in two successive ones.

12. A cipher process apparatus manufacturing method, comprising:

a cipher process basic unit production step which is a cipher process section for executing a Feistel type common key block cipher process which repeats an SP type F function of executing a data conversion process including a nonlinear conversion process and a linear conversion process by a plurality of rounds, the cipher process basic unit production step producing a cipher process basic unit having an involution property which allows an encryption function and a decryption function to be carried out by the same circuit only by reversing the order of use of round keys to be used and having an array of a plurality of different F functions which satisfies an F function array condition set in advance; and
a round number changing step of executing a process of applying the cipher process basic unit and selecting and adding an F function which satisfies the F function array condition based on the round number of a cipher process section set in a cipher process apparatus.

13. The cipher process apparatus manufacturing method according to claim 12, wherein
the F function array condition is that,
in a case that the F function of each round included in a cipher process section which executes the Feistel type common key block cipher process has a configuration which includes three kinds of F functions $F_0$, $F_1$ and Which apply three different linear conversion matrices $M_0$, $M_1$ and $M_2$,
where the odd-numbered rounds are successively selected from the top, the three kinds of F functions $F_0$, and are included in three successive ones, but where the even-numbered rounds are selected from the last round, the three kinds of F functions $F_0$, $F_1$ and $F_2$ are included in three successive ones.

14. The cipher process apparatus manufacturing method according to claim 12, wherein
the F function array condition is that,
in a case that the F function of each round included in a cipher process section which executes the Feistel type common key block cipher process has a configuration which includes two kinds of F functions $F_0$ and $F_1$ which apply two different linear conversion matrices $M_0$ and $M_1$,
where the odd-numbered rounds are successively selected from the top round, the two kinds of F functions $F_0$ and $F_1$ are included in two successive ones, but where the even-numbered rounds are selected from the last round, the two kinds of F functions $F_0$ and $F_1$ are included in two successive ones.

15. The cipher process apparatus manufacturing method according to claim 12, wherein the round number changing step is a step at which a process of selecting and adding an F function, which satisfies the F function array condition, successively one by one prior to the top round and next to the last round which compose the cipher process basic unit is executed.

16. The cipher process apparatus manufacturing method according to claim 12, wherein the round number changing step is a step at which a plurality of such cipher process basic units are connected to execute the F function addition process.

17. A computer program for causing a cipher process apparatus to execute a cipher process, said computer program causing:

a cipher process section to carry out a cipher process step of executing a Feistel type common key block cipher process which repeats an SP type F function of executing a data conversion process including a nonlinear conversion process and a linear conversion process by a plurality of rounds, the cipher process step including execution of a cipher process which utilizes a cipher process basic unit having an involution property which allows an encryption function and a decryption function to be carried out by the same circuit only by reversing the order of use of round keys to be used and having an array of a plurality of different F functions which satisfies an F function array condition set in advance; and

a control section to carry out a control step of carrying out execution control of cipher process operation in which the cipher process basic unit is utilized once or repetitively by a plural number of times based on utilization time number setting information of the cipher process basic unit configured in the cipher process section.

# FIG.1

# FIG.2

・a・・

120

mnbit
$K_i$

Y ← mnbit ← **F** ← mnbit ← X

・b・・

120

122

Z

121

$K_i$
mnbit

nbit

nbit

S-box 1

S-box 2

**LINEAR CONVERSION SECTION**

S-box 3

Y ← mnbit

S-box m

X ← mnbit

**LINEAR CONVERSION LAYER**

**NONLINEAR CONVERSION LAYER**

# FIG.3

# FIG.4

ROUND1

$M_0$

ROUND2

$M_1$

ROUND3

$M_1$

ROUND4

$M_0$

ROUND5

$M_0$

ROUND6

$M_1$

ROUND7

$M_1$

ROUND8

$M_0$

ROUND9

$M_0$

ROUND10

$M_1$

ROUND11

$M_1$

ROUND12

$M_0$

# FIG.5

ROUND1 $M_0$

ROUND2 $M_2$

ROUND3 $M_1$

ROUND4 $M_1$

ROUND5 $M_2$

ROUND6 $M_0$

ROUND7 $M_0$

ROUND8 $M_2$

ROUND9 $M_1$

ROUND10 $M_1$

ROUND11 $M_2$

ROUND12 $M_0$

# F I G . 6

ROUND1

$F_0$ $M_0$

ROUND2

$F_2$ $M_2$

ROUND3

$F_1$ $M_1$

ROUND4

$F_1$ $M_1$

ROUND5

$F_2$ $M_2$

ROUND6

$F_0$ $M_0$

# F I G . 7

ROUND1

| $F_0$ | $M_0$ |

ROUND2

| $F_0$ | $M_0$ |

ROUND3

| $F_1$ | $M_1$ |

ROUND4

| $F_2$ | $M_2$ |

ROUND5

| $F_2$ | $M_2$ |

ROUND6

| $F_1$ | $M_1$ |

ROUND7

| $F_0$ | $M_0$ |

ROUND8

| $F_0$ | $M_0$ |

# FIG.8

# F I G . 9

# FIG.10

# FIG.11

# FIG.12

# FIG.13

# FIG.14

300

IC MODULE

301 — | CPU | ⟷ | MEMORY | — 302

| CIPHER PROCESSING SECTION | — 303

305

| TRANSCEIVING SECTION | ⟷ | RANDOM NUMBER GENERATOR | — 304

# FIG.15

501

502

510

CIPHER PROCESS
BASIC UNIT
PRODUCTION
SECTION

ROUND NUMBER
CHANGING
SECTION

## INTERNATIONAL SEARCH REPORT

| | International application No. |
|---|---|
| | PCT/JP2007/050010 |

A. CLASSIFICATION OF SUBJECT MATTER
*G09C1/00*(2006.01)i, *H04L9/06*(2006.01)i

According to International Patent Classification (IPC) or to both national classification and IPC

B. FIELDS SEARCHED

Minimum documentation searched (classification system followed by classification symbols)
G09C1/00, H04L9/06

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 3-129384 A (Nippon Telegraph And Telephone Corp.), 03 June, 1991 (03.06.91), Page 2, upper right column, line 14 to page 6, upper right column, line 13 (Family: none) | 1-17 |
| Y | JP 4-170576 A (Hitachi, Ltd., Hitachi Chubu Software Kabushiki Kaisha), 18 June, 1992 (18.06.92), Page 3, lower right column, line 4 to page 8, lower right column, line 2 & US 5222139 A | 1-17 |

| [X] Further documents are listed in the continuation of Box C. | | [ ] See patent family annex. |
|---|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April, 2007 (20.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/050010

C (Continuation). DOCUMENTS CONSIDERED TO BE RELEVANT

| Category* | Citation of document, with indication, where appropriate, of the relevant passages | Relevant to claim No. |
|---|---|---|
| Y | Improving Immunity of Feistel Ciphers against Differential Cryptanalysis by Using Multiple MDS Matrices, Lecture Notes in Computer Science, Vol.3017, p.260-278, 2004 especially 2 Preliminaries, 5 Multiple MDS Feistel Structure Design | 1-17 |
| A | On Feistel Ciphers Using Optimal Diffusion Mappings Across Multiple Rounds, Lecture Notes in Computer Science, Vol.3329, p.1-15, 2004, all pages | 1-17 |
| P,A | On Feistel Structures Using a Diffusion Switching Mechanism, Lecture Notes in Computer Science, Vol.4047, p.41-56, 2006.03, all pages | 1-17 |
| T | The 128-bit Blockcipher CLEFIA. Fast Software Encryption 2007 Videos and Slides. [online]. 2007 [retrieved on 2007-04-19]. Retrieved from the Internet:<URL:http://fse2007.uni.lu/slides/clefia.pdf>. | 1-17 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005313842 A